# EUROPÄISCHE PATENTANMELDUNG

(11) **EP 1 158 776 A2**
(43) Veröffentlichungstag der Anmeldung: **28.11.2001**
(21) Anmeldenummer: 01109092.5
(22) Anmeldetag: 12.04.2001
(51) Int. Cl.: H04N 1/50

(54) **Verfahren und Vorrichtung zur Korrektur von Registerfehlern bei einer Mehrfarbendruckmaschine**

(30) Priorität: 17.05.2000 US 204691 P
(71) Anmelder: NexPress Solutions LLC, Rochester, New York 14653-5007 (US)
(72) Erfinder: Liston, Christopher, Rochester, NY 14618 (US); Metzler, Patrick, Dr., 24214 Gettorf (DE)
(74) Vertreter: Weber, Walter, Dipl.-Ing.(FH)

(57) **Zusammenfassung**

Die Erfindung betrifft eine Vorrichtung und ein Verfahren zur Korrektur von auf Maschinenzustandsänderungen (4, 4', ...; 5, 5', ...) basierenden Registerfehlern bei einer Mehrfarbendruckmaschine (1) mit mehreren Druckwerken (13, 13', ...) mit Bildzylindern (14, 14', ...) und Einrichtungen (2, 2', ...) zur digitalen Erzeugung von Teilfarbenbildern (3, 3', ...) auf den Bildzylindern (14, 14', ...), wobei die Erstellung und Zusammenfügung der Teilfarbenbilder (3, 3', ...) derart gesteuert werden, daß registerhaltige Drucke erzielt werden.

Die bekannten Verfahren und Vorrichtungen dieser Art erfassen Registerfehler durch Probedrucke, beispielsweise durch Registermarken. Dadurch werden Änderungen, die zu Störungen der Registergenauigkeit führen, erst erfaßt, wenn ein Registerfehler bereits vorhanden ist. Durch die Erfindung soll das Auftreten von Registerfehlern durch Abmessungsänderungen, insbesondere zwischen den Druckwerken (13, 13', ...) in möglichst weitgehendem Maß von vornherein verhindert werden.

Dies wird dadurch erreicht, daß Maschinenzustandsänderungen (4, 4', ...; 5, 5', ...) erfaßt werden und aufgrund dieser Maschinenzustandsänderungen (4, 4', ...; 5, 5', ...) die Erzeugung der Teilfarbenbilder (3, 3', ...) derart verändert wird, daß eine durch eine Maschinenzustandsänderung (4, 4', ...; 5, 5', ...) drohende Störung der Registergenauigkeit des Drucks kompensiert wird.

## Beschreibung

Die Erfindung betrifft ein Verfahren zur Korrektur von auf Maschinenzustandsänderungen basierenden Registerfehlern bei einer Mehrfarbendruckmaschine mit mehreren Druckwerken mit Bildzylindern und Einrichtungen zur digitalen Erzeugung von Teilfarbenbildern auf den Bildzylindern, wobei die Erstellung und Zusammenfügung der Teilfarbenbilder derart gesteuert werden, daß registerhaltige Drucke erzielt werden.

Die Erfindung betrifft weiterhin eine Vorrichtung zur Durchführung des Verfahrens mit einer Mehrfarbendruckmaschine mit mehreren Druckwerken mit Bildzylindern und Einrichtungen zur digitalen Erzeugung von Teilfarbenbildern auf den Bildzylindern und mindestens einer Steuerung für die Erzielung registerhaltiger Drucke, wobei die Erzeugung und Zusammenfügung der Teilfarbenbilder gesteuert wird.

Der Druck farbiger Darstellungen, insbesondere farbiger Bilder, erfolgt dadurch, daß mehrere Teilfarbenbilder übereinander gedruckt werden. Dies sind in der Regel die Farben Gelb, Magenta und Zyan sowie Schwarz. Bei Bedarf kommen noch Sonderfarben hinzu. Durch das Übereinanderdrucken dieser Farben lassen sich alle Farbkombinationen erzielen, wobei die Qualität der Drucke wesentlich von dem registerhaltigen Übereinanderdrucken der Teilfarbenbilder abhängt. Bei digitalen, beispielsweise elektrostatischen Druckverfahren wird die Registerhaltigkeit des Übereinanderdruckens dadurch erzielt, daß die Bilderzeugungseinrichtungen derart gesteuert werden, daß die Teilfarbenbilder bei der Übertragung auf ein Drucksubstrat registerhaltig aufeinander treffen.

Ein Verfahren und eine Vorrichtung der eingangs genannten Art ist aus der US 5, 715, 498 bekannt. Dort wird eine Korrektur von Registerfehlern durch den Druck und die Erfassung von Registermarken vorgeschlagen. Registerfehler werden oft durch Maschinenzustandsänderungen verursacht, beispielsweise rühren Temperaturveränderungen zu Abmessungsänderungen, insbesondere bezüglich des Abstands zwischen den einzelnen Druckwerken oder zwischen den Lagern verschiedener Zylinder. Der Nachteil dieser technischen Lösung besteht darin, daß bei Maschinenzustandsänderungen eine Gegensteuerung immer erst für den nächsten Druck möglich ist, da die Auswirkung einer Maschinenzustandsänderung erst dann erfaßt wird, wenn sie bereits einen Registerfehler verursacht hat. Dadurch sind Probedrucke notwendig und es geht Zeit verloren, was bei kleinen Auflagen oft unwirtschaftlich und daher nicht akzeptabel ist.

Der Erfindung liegt daher die Aufgabe zugrunde, bei einem Verfahren und einer Vorrichtung der eingangs genannten Art das Auftreten von Registerfehlern durch Abmessungsänderungen, insbesondere zwischen den Druckwerken oder zwischen Lagerungen verschiedener Zylinder in möglichst weitgehendem Maß von vornherein zu verhindern.

Bezüglich des Verfahrens wird die Aufgabe erfindungsgemäß dadurch gelöst, daß Maschinenzustandsänderungen erfaßt werden und aufgrund dieser Maschinenzustandsänderungen die Erzeugung der Teilfarbenbilder derart verändert wird, daß eine durch eine Maschinenzustandsänderung drohende Störung der Registergenauigkeit des Drucks kompensiert wird.

Bezüglich der Vorrichtung wird die Aufgabe erfindungsgemäß dadurch gelöst, daß mindestens ein Sensor zur Erfassung von Maschinenzustandsänderungen angeordnet ist und die mindestens eine Steuerung derart ausgebildet ist, daß sie die Erzeugung der Teilfarbenbilder derart verändert, daß die durch die Maschinenzustandsänderungen drohenden Störungen der Registergenauigkeit des Drucks kompensiert sind.

Der Vorteil der Erfindung besteht darin, daß vielen das Register beeinflussende Veränderungen ohne jegliche Verzögerung entgegengesteuert wird. Ein Einfluß einer Maschinenzustandsänderung kann auf diese Weise derart schnell entgegengesteuert werden, daß Probedrucke von Drucken und/oder Registermarken in der Regel nicht erforderlich sind. Gerade bei Kleinauflagen ist dies wirtschaftlich von Bedeutung, da Maschinenzeit und oftmals auch Drucksubstrate eingespart werden.

Selbstverständlich läßt sich jedoch die erfindungsgemäße Maßnahme noch mit weiteren Registererfassungen, -steuerungen und -regelungen kombinieren, um eine Kontrolle und gegebenenfalls eine exaktere Korrektur, insbesondere bei weiteren Fehlerursachen, zu erzielen. Dabei bleibt der erfindungsgemäße Vorteil, daß bedeutende Fehlerursachen ohne jegliche Verzögerung kompensiert werden können, weiter erhalten und es werden Fehler vermieden oder zumindest stark reduziert. Makulaturdrucke können auf diese Weise weitgehendst vermieden werden und es sind auch keine sonstigen zeitaufwendigen Steuerungs- oder Regelungsvorgänge erforderlich, um bereits brauchbare Drucke zu erzielen.

Durch die Erfindung können verschiedene Arten von Maschinenzustandsänderungen erfaßt und berücksichtigt werden. Ziel ist es dabei, solche Maschinenzustandsänderungen zu erfassen, die Einfluß auf das Register haben. Dies sind primär Abmessungsänderungen, insbesondere zwischen den einzelnen Druckwerken, aber auch zwischen den Lagerungen verschiedener Zylinder, wie zwischen Bildzylindern und Bildübertragungszylindern. Solche Abstandsänderungen werden durch Temperatur- und/oder Änderungen mechanischer Spannungen verursacht.

Es ist möglich, daß die Temperatur der Mehrfarbendruckmaschine an mindestens einer Stelle erfaßt wird. Weitere Möglichkeiten bestehen darin, die mechanische Spannung oder eine Abstandsänderung in der Mehrfarbendruckmaschine zu erfassen. Zweckmäßigerweise werden Messungen an mehreren Stellen vorgenommen, wobei die Meßstellen derart gelegt werden, daß die Maschinenzustandsänderungen an den Stellen erfaßt werden, an denen sie einen für die Druckqualität maßgeblichen Einfluß auf das Register ausüben, wie beispielsweise der Abstand zwischen den einzelnen Druckwerken. Bezüglich der Vorrichtung wird dann vorgeschlagen, daß mindestens ein Temperatursensor, mindestens ein Sensor zur Messung von mechanischen Spannungen und/oder mindestens ein Sensor zur Erfassung von Abmessungsänderungen angeordnet ist.

Für die Kompensation der drohenden Störung der Registergenauigkeit gibt es verschiedene Möglichkeiten. Ein Vorschlag besteht darin, daß eine Maschinenzustandsänderung erfaßt und einer dadurch drohenden Störung der Registergenauigkeit des Drucks entgegensteuernde Veränderung der Erzeugung der Teilfarbenbilder vorgenommen wird und danach eine Regelung des Registers aufgrund einer Erfassung des Druckergebnisses stattfindet. In diesem Fall ist eine Gegensteuerung der Regelung vorgelagert, um die Größe des drohenden Registerfehlers von vornherein zu minimieren. Eine andere Möglichkeit besteht darin, daß eine Maschinenzustandsänderung quantitativ erfaßt wird und eine Kompensation einer dadurch drohenden Störung der Registergenauigkeit des Drucks aufgrund der Maschinenzustandsänderung durch abgelegte Erfahrungswerte, die der quantitativen Maschinenzustandsänderung zugeordnet sind, erfolgt.

Bezüglich der Vorrichtung wird vorgeschlagen, daß die Steuerung derart ausgebildet ist, daß sie auf eine Maschinenzustandsänderung einer dadurch drohenden Störung der Registergenauigkeit des Drucks entgegensteuernde Veränderung der Erzeugung der Teilfarbenbilder und danach eine Regelung derselben aufgrund einer Erfassung des Druckergebnisses vornimmt. Bei der Erfassung des Druckergebnisses kann ein Druck selbst, beispielsweise der Druckanfang erfaßt werden oder es ist möglich, daß zur Erfassung des Druckergebnisses ein Sensor zur Erfassung von Registermarken angeordnet ist. Registermarken können auf den Träger für Drucksubstrate oder auf einem bildfreien Rand eines Drucksubstrats, beziehungsweise auf ein Probeblatt gedruckt werden. Für die andere Alternative bezüglich der Kompensation der drohenden Störung der Registergenauigkeit wird als Vorrichtung vorgeschlagen, daß der mindestens eine Sensor zur quantitativen Erfassung von Maschinenzustandsänderungen ausgebildet ist und die mindestens eine Steuerung derart ausgebildet ist, daß sie eine Kompensation einer dadurch drohenden Störung der Registergenauigkeit des Drucks bewirkt, indem sie die Steuerung aufgrund abgelegter Erfahrungswerte vornimmt, die den quantitativen Maschinenzustandsänderungen zugeordnet sind.

Die erfindungsgemäße Maßnahme schließt selbstverständlich die Kombination mit einer herkömmlichen Registerregelung nicht aus, sie ist meistens eine Ergänzung zu einer solchen, um Auswirkungen einer Veränderung entgegenzuwirken, bevor sie sich in Registerfehlern manifestieren. Es kann daher vorgesehen sein, daß die Steuerung zusätzlich zu einer Erfassung von Registermarken durch einen Sensor oder eine andere Registerregelung oder -steuerung vorgesehen ist. Sind andere Fehlerursachen gering, so kann die erfindungsgemäße Registerregelung jedoch auch allein zu dem Ziel hoher Registergenauigkeit führen.

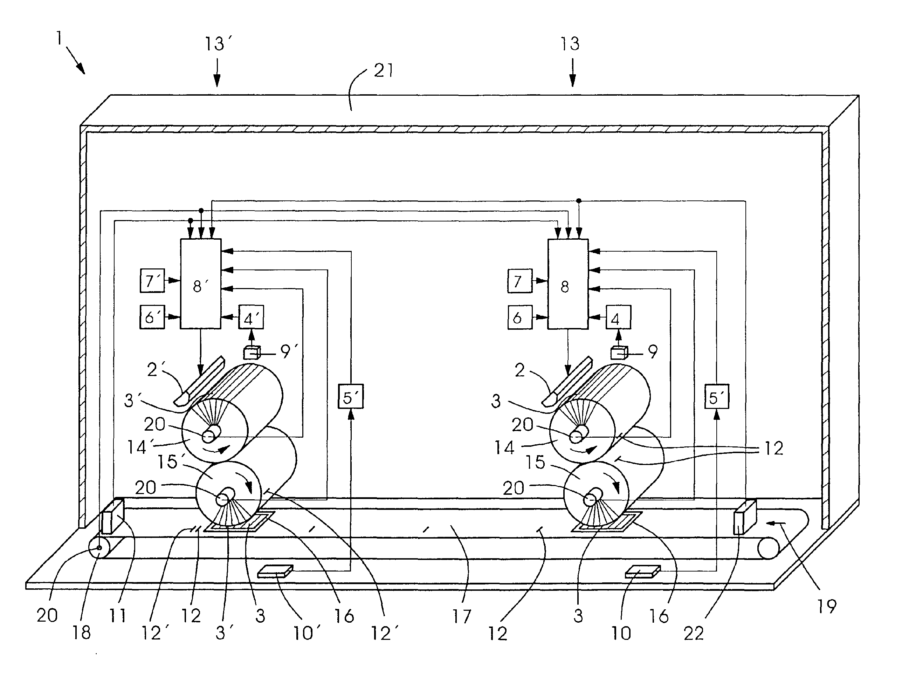

Die Erfindung wird nachfolgend anhand eines in der Figur dargestellten schematischen Ausführungsbeispiels erläutert.

Die Figur zeigt eine Mehrfarbendruckmaschine 1, wobei das Gehäuse 21 teilweise aufgeschnitten dargestellt ist. Die dargestellte Druckmaschine verfügt über zwei Druckwerke 13 und 13', wobei diese Darstellung mit zwei Druckwerken zur Vereinfachung gewählt wurde. Normalerweise verfügen Druckmaschinen über vier oder mehr Druckwerke 13, 13', ... . Diese müssen zur Darstellung in der Figur hinzugedacht werden.

Die Mehrfarbendruckmaschine 1 verfügt über Einrichtungen 2, 2', ... zur digitalen Erzeugung von Teilfarbenbildern 3, 3', ... . Diese werden in digitaler Form auf Bildzylinder 14, 14', ... aufgebracht. Von den Bildzylindern 14, 14', ... werden sie auf Bildübertragungszylinder 15, 15', ... und von dort auf Drucksubstrate 16 übertragen. Die Drucksubstrate 16 werden durch einen Träger 17 durch die Druckmaschine geführt.

Der Träger 17 wird durch eine Antriebsrolle 18 angetrieben und transportiert die Drucksubstrate 16 in Richtung des Pfeils 19.

Da die Teilfarbenbilder 3, 3', ... positionsrichtig, also registerhaltig auf die Drucksubstrate 16 kommen müssen, ist eine Steuerung 8, 8', ... vorgesehen, welche die Positionszuordnungen der Teilfarbenbilder 3, 3', ... zueinander und zu den Drucksubstraten 16 steuert. Dafür werden die Positionen der Bildzylinder 14, 14', ..., der Bildübertragungszylinder 15, 15', ... und des Trägers 17 erfaßt. Zu diesem Zweck sind Sensoren vorgesehen, beispielsweise Drehwinkelgeber 20. Durch deren Informationen enthält die Steuerung 8, 8', ... die Daten über die Positionen der genannten bild- und substrattragenden Elemente der Druckmaschine. Zur Zuordnung zu einem Drucksubstrat 16 dient ein Sensor 22 zur Erfassung von Drucksubstraten 16, der am Beginn des Trägers 17 angeordnet ist. Diese Darstellung ist lediglich ein Beispiel für eine Registersteuerung, die Erfindung läßt sich auch mit anderen Arten von Registersteuerungen kombinieren, beispielsweise einer solchen, die die Erzeugung der Teilfarbenbilder 3, 3', ... mittels einer Zeit- oder Positionserfassung von Registermarken 12, 12', ... steuert. Dabei werden diese Registermarken 12, 12', ... von den Druckwerken 13, 13', ... gedruckt und durch einen Sensor 11 erfaßt.

Die Erfindung besteht darin, daß Maschinenzustandsänderungen 4, 4', ...; 5, 5', ... möglichst frühzeitig erfaßt werden und daß einer durch eine derartige Maschinenzustandsänderung 4, 4', ...; 5, 5', ... drohenden Störung der Registergenauigkeit des Drucks sofort entgegengewirkt wird, bevor sich die Maschinenzustandsänderung 4, 4', ...; 5, 5', ... auf die Druckqualität auswirkt. Zu diesem Zweck sind Temperatursensoren 9, 9',... und Spannungssensoren (Sensoren zur Messung von mechanischen Spannungen) 10, 10', ... vorgesehen. Damit werden Temperaturänderungen 4, 4', ... und die Änderungen mechanischer Spannungen 5, 5', ... in der Druckmaschine 1 sofort erfaßt und es wird umgehend eine Gegensteuerung vorgesehen, die drohende Störungen der Registergenauigkeit verhindert oder zumindest so frühzeitig wie möglich solchen Störungen entgegenwirkt.

Zu diesem Zweck geben die Temperatursensoren 9, 9', ... Daten über die Maschinenzustandsänderungen 4, 4', ... (Temperaturänderungen) und die Spannungssensoren 10, 10', ... Daten über die Maschinenzustandsänderungen 5, 5', ... (Änderungen der mechanischen Spannung) sofort an Steuerungen 8, 8', ..., diese veranlassen umgehend Veränderungen der Erzeugung der Teilfarbenbilder 3, 3', ..., wobei diese Veränderungen derart sind, daß sie den drohenden Störungen der Registergenauigkeit entgegengesetzt sind.

Besonders zweckmäßig ist es, wenn die Temperaturänderungen 4, 4', ... und die Änderungen der mechanischen Spannung 5, 5', ... quantitativ erfaßt werden und die Veränderung der Erzeugung der Teilfarbenbilder 3, 3', ... durch die Steuerungen 8, 8', ... und die Einrichtungen 2, 2', ... aufgrund abgelegter Erfahrungswerte 6, 6', ..., die Temperaturen zugeordnet sind oder durch abgelegte Erfahrungswerte 7, 7', ..., die mechanischen Spannungen zugeordnet sind, erfolgt. Selbstverständlich ist jedoch eine andere Art der Kompensation ebenso möglich, beispielsweise eine Erfassung der Richtung der drohenden Störung und eine Gegensteuerung entsprechend dieser Richtung, wobei dann das Ergebnis, beispielsweise mittels Registermarken 12, 12', ..., erfaßt werden muß und ein Regelungskreis die Korrektur ergebnisorientiert zuendeführt.

Zur Erfassung des Ergebnisses der Korrektur ist noch ein Sensor 11 zur Erfassung von Registermarken 12, 12', ... dargestellt. Diese Registermarken 12, 12', ... werden von den Druckwerken 13, 13', ... mitgedruckt, wobei sie auf den Träger 17 auf ein Probeblatt oder auf den druckfreien Rand eines Substrats 16 gedruckt werden können. Der Sensor 11 erfaßt die Lage der Registermarken 12, 12', ... und gibt diese Daten ebenfalls an die Steuerungen 8, 8', ..., damit diese die erfindungsgemäße Registerregelung überprüfen und gegebenenfalls korrigieren können, was insbesondere dann von Vorteil ist, wenn noch andere Fehlerursachen hinzukommen. Für diesen Fall führt die Erfindung jedoch zu einer erheblichen Reduzierung der Fehlergröße, wodurch die Registergenauigkeit sich oftmals noch im tollerierbaren Bereich befindet.

Bei der Darstellung handelt es sich um ein Ausführungsbeispiel einer Druckmaschine, diese kann selbstverständlich auch anders aufgebaut sein, beispielsweise nur über vier Bildzylinder 14, 14', ... verfügen, welche die Teilfarbenbilder 3, 3', ... direkt auf die Drucksubstrate 16 übertragen. Davon ist die Einbeziehung des erfindungsgemäßen Verfahrens und der erfindungsgemäßen Vorrichtung genauso wenig abhängig wie von der übrigen Registerregelung, zu der die erfindungsgemäße Maßnahme als Zusatz vorgesehen sein kann.

### Bezugszeichenliste

- 1: Mehrfarbendruckmaschine
- 2, 2', ...: Einrichtungen zur digitalen Erzeugung von Teilfarbenbildern
- 3, 3', ...: Teilfarbenbilder
- 4, 4', ...: Maschinenzustandsänderungen, hier Temperaturänderungen
- 5, 5', ...: Maschinenzustandsänderungen, hier Änderungen der mechanischen Spannung
- 6, 6', ...: abgelegte Erfahrungswerte - Temperaturen zugeordnet
- 7, 7', ...: abgelegte Erfahrungswerte - mechanischen Spannungen zugeordnet
- 8, 8', ...: Steuerung für die Erzielung registerhaltiger Drucke
- 9, 9', ...: Temperatursensor
- 10, 10', ...: Spannungssensor (Sensor zur Messung von mechanischen Spannungen)
- 11: Sensor zur Erfassung von Registermarken
- 12, 12', ...: Registermarken
- 13, 13',...: Druckwerke
- 14, 14', ...: Bildzylinder
- 15, 15', ...: Bildübertragungszylinder
- 16: Drucksubstrat
- 17: Träger für Drucksubstrate
- 18: Antriebsrolle
- 19: Pfeil: Transportrichtung
- 20: Drehwinkelgeber
- 21: Gehäuse
- 22: Sensor zur Erfassung von Drucksubstraten

## Patentansprüche

1. Verfahren zur Korrektur von auf Maschinenzustandsänderungen (4, 4', ...; 5, 5', ...) basierenden Registerfehlern bei einer Mehrfarbendruckmaschine (1) mit mehreren Druckwerken (13, 13', ...) mit Bildzylindern (14, 14', ...) und Einrichtungen (2, 2', ...) zur digitalen Erzeugung von Teilfarbenbildern (3, 3', ...) auf den Bildzylindern (14, 14', ...), wobei die Erstellung und Zusammenfügung der Teilfarbenbilder (3, 3', ...) derart gesteuert werden, daß registerhaltige Drucke erzielt werden,
**dadurch gekennzeichnet,**
**daß** Maschinenzustandsänderungen (4, 4', ...; 5, 5', ...) erfaßt werden und aufgrund dieser Maschinenzustandsänderungen (4, 4', ...; 5, 5', ...) die Erzeugung der Teilfarbenbilder (3, 3', ...) derart verändert wird, daß eine durch eine Maschinenzustandsänderung (4, 4', ...; 5, 5', ...) drohende Störung der Registergenauigkeit des Drucks kompensiert wird.

2. Verfahren nach Anspruch 1,
**dadurch gekennzeichnet,**
**daß** die Temperatur der Mehrfarbendruckmaschine (1) an mindestens einer Stelle erfaßt wird.

3. Verfahren nach Anspruch 1 oder 2,
**dadurch gekennzeichnet,**
**daß** eine mechanische Spannung in der Mehrfarbendruckmaschine (1) an mindestens einer Stelle erfaßt wird.

4. Verfahren nach Anspruch 1, 2 oder 3,
**dadurch gekennzeichnet,**
**daß** Abmessungsänderungen in der Mehrfarbendruckmaschine (1) an mindestens einer Stelle erfaßt werden.

5. Verfahren nach einem der Ansprüche 1 bis 4,
**dadurch gekennzeichnet,**
**daß** eine Maschinenzustandsänderung (4, 4', ...; 5, 5', ...) erfaßt und einer dadurch drohenden Störung der Registergenauigkeit des Drucks entgegensteuernde Veränderung der Erzeugung der Teilfarbenbilder (3, 3', ...) vorgenommen wird und danach eine Regelung des Registers aufgrund einer Erfassung des Druckergebnisses stattfindet.

6. Verfahren nach einem der Ansprüche 1 bis 4,
**dadurch gekennzeichnet,**
**daß** eine Maschinenzustandsänderung (4, 4', ...; 5, 5', ...) quantitativ erfaßt wird und eine Kompensation einer dadurch drohenden Störung der Registergenauigkeit des Drucks aufgrund der Maschinenzustandsänderung (4, 4', ...; 5, 5', ...) durch abgelegte Erfahrungswerte (6, 6', ...; 7, 7', ...), die der quantitativen Maschinenzustandsänderung (4, 4', ..., 5, 5', ...) zugeordnet sind, erfolgt.

7. Vorrichtung zur Durchführung eines Verfahrens nach einem der Ansprüche 1 bis 6 mit einer Mehrfarbendruckmaschine (1) mit mehreren Druckwerken (13, 13', ...) mit Bildzylindern (14, 14', ...) und Einrichtungen (2, 2', ...) zur digitalen Erzeugung von Teilfarbenbildern (3, 3', ...) auf den Bildzylindern (14, 14', ...) und mindestens einer Steuerung (8, 8', ...) für die Erzielung registerhaltiger Drucke, wobei die Erzeugung und Zusammenfügung der Teilfarbenbilder (3, 3', ...) gesteuert wird,
**dadurch gekennzeichnet,**
**daß** mindestens ein Sensor (9, 9', ...; 10, 10', ...) zur Erfassung von Maschinenzustandsänderungen (4, 4', ..., 5, 5', ...) angeordnet ist und die mindestens eine Steuerung (8, 8', ...) derart ausgebildet ist, daß sie die Erzeugung der Teilfarbenbilder (3, 3', ...) derart verändert, daß die durch die Maschinenzustandsänderungen (4, 4', ...; 5, 5 ', ...) drohenden Störungen der Registergenauigkeit des Drucks kompensiert sind.

8. Vorrichtung nach Anspruch 7,
**dadurch gekennzeichnet,**
**daß** in der Mehrfarbendruckmaschine (1) mindestens ein Temperatursensor (9, 9', ...) angeordnet ist.

9. Vorrichtung nach Anspruch 7 oder 8,
**dadurch gekennzeichnet,**
**daß** in der Mehrfarbendruckmaschine (1) mindestens ein Sensor zur Messung von mechanischen Spannungen (10, 10', ...) angeordnet ist.

10. Vorrichtung nach Anspruch 7, 8 oder 9,
**dadurch gekennzeichnet,**
**daß** in der Mehrfarbendruckmaschine (1) mindestens ein Sensor zur Erfassung von Abmessungsänderungen angeordnet ist.

11. Vorrichtung nach einem der Ansprüche 7 bis 10,
**dadurch gekennzeichnet,**
**daß** die Steuerung (8, 8', ...) derart ausgebildet ist, daß sie auf eine Maschinenzustandsänderung (4, 4', ...; 5, 5', ...) einer dadurch drohenden Störung der Registergenauigkeit des Drucks entgegensteuernde Veränderung der Erzeugung der Teilfarbenbilder (3, 3', ...) und danach eine Regelung derselben aufgrund einer Erfassung des Druckergebnisses vornimmt.

12. Vorrichtung nach Anspruch 11,
**dadurch gekennzeichnet,**
**daß** zur Erfassung des Druckergebnisses ein Sensor (11) zur Erfassung von Registermarken (12, 12', ...) angeordnet ist.

13. Vorrichtung nach einem der Ansprüche 7 bis 10,
**dadurch gekennzeichnet,**
**daß** der mindestens eine Sensor (9, 9', ...; 10, 10', ...) zur quantitativen Erfassung von Maschinenzustandsänderungen (4, 4', ...; 5, 5',...) ausgebildet ist und die mindestens eine Steuerung (8, 8', ...) derart ausgebildet ist, daß sie eine Kompensation einer dadurch drohenden Störung der Registergenauigkeit des Drucks bewirkt, indem sie die Steuerung aufgrund abgelegter Erfahrungswerte (6, 6', ...; 7, 7', ...) vornimmt, die den quantitativen Maschinenzustandsänderungen (4, 4', ...; 5, 5', ...) zugeordnet sind.

14. Vorrichtung nach Anspruch 13,
**dadurch gekennzeichnet,**
**daß** die Steuerung (8, 8', ...) zusätzlich aufgrund einer Erfassung von Registermarken (12, 12', ...) durch einen Sensor (11) Korrekturen der Steuerung der Erzeugung der Teilfarbenbilder (3, 3', ...) vornimmt.
